# EUROPEAN PATENT SPECIFICATION

(11) **EP 2 876 270 B1**
(45) Date of publication and mention of the grant of the patent: **12.07.2017**
(21) Application number: 12881197.3
(22) Date of filing: 19.07.2012
(51) Int. Cl.: F01N 3/08, F01N 3/36, F01N 3/20, F01N 9/00

(54) **ADDITIVE SUPPLY DEVICE FOR INTERNAL COMBUSTION ENGINE**
ZUSATZSTOFFZUFUHRVORRICHTUNG FÜR VERBRENNUNGSMOTOREN
DISPOSITIF D'ALIMENTATION EN ADDITIF POUR MOTEUR À COMBUSTION INTERNE

(43) Date of publication of application: 27.05.2015
(73) Proprietor: Toyota Jidosha Kabushiki Kaisha, Toyota-shi, Aichi 471-8571 (JP)
(72) Inventor: OTA, Hirohiko, Toyota-shi Aichi 471-8571 (JP)
(74) Representative: J A Kemp
(86) International application number: PCT/JP2012/068372
(87) International publication number: WO 2014/013596

(56) References cited:
- WO-A1-2008/056417
- WO-A1-2011/145567
- DE-A1-102007 055 032
- JP-A- 2009 144 644
- JP-A- 2010 164 014
- JP-A- 2010 185 334
- JP-A- 2011 117 441
- US-A1- 2005 207 936
- US-A1- 2007 035 832
- US-A1- 2012 031 084

## Description

### TECHNICAL FIELD

The present invention relates to an additive supply device for an internal combustion engine.

### BACKGROUND ART

To purify exhaust of an internal combustion engine, a device for supplying an additive to an exhaust passage has been known. In a device as described in Patent Document 1 for example, a urea aqueous solution is supplied to the exhaust passage in order to purify nitrogen oxides (NOx) in the exhaust.

Thu supply of additive into the exhaust passage is difficult when the additive is frozen. Therefore, a heater for thawing additive is provided to the additive supply device. Since execution of current supply to the heater increases electricity consumption, the device described in Patent Document 1 is configured such that a frozen state of the additive is detected based on an output value of a capacitance level sensor, and an ON time of the heater is varied according to the detected frozen state, thereby omitting unnecessary ON-time as much as possible to limit increase in the electricity consumption.

DE 10 2007 055 032 A1 discloses an additive supply device according to the precharacterizing portion of claim 1.

### PRIOR ART DOCUMENTS

### Patent Documents

Patent Document 1: Japanese Laid-Open Patent Publication No. 2010-164014

### SUMMARY OF THE INVENTION

### Problems that the Invention is to Solve

In the foregoing conventional device, the ON time of the heater is varied according to the detected frozen state. However, the heater is kept in the ON state until the additive is determined not to be frozen, that is, until the additive is completely thawed. Thus, electricity is consumed more than necessary.

Accordingly, it is an objective of the present invention to reduce the amount of current supplied to a heater in thawing additive.

### Means for Solving the Problems

To achieve the foregoing objective and in accordance with the present invention, an additive supply device according to claim 1 is provided.

When current is supplied to the heater to thaw frozen additive, the temperature of the solid-phase additive is gradually increased. Once a part of the frozen additive starts to be thawed and changes to the liquid phase, the temperature increase of the additive temporarily stops and the additive is maintained at a constant temperature. When the entire additive is thawed and changes to the liquid phase, the temperature of the additive starts to rise again. Since a part of the additive changes from the solid state to the liquid state when the temperature of the additive stays constant during current supply to the heater as described above, the additive can be supplied into the exhaust passage. Accordingly, in the present invention, when the temperature of the additive becomes constant during current supply to the heater, the current reduction process for reducing the amount of current supplied to the heater compared to that before the temperature of the additive becomes constant is carried out. Consequently, the amount of current supplied to the heater in thawing the additive can be reduced compared to the case where the heater is kept in the ON state until the additive is completely thawed and the current supply amount is not reduced.

The expression "when the temperature of the additive becomes constant" does not indicate only the time when the change in temperature of the additive becomes completely 0. That is, it indicates, with regard to the state of the additive during thawing, a state where both the solid phase and the liquid phase are present in a mixed state and the temperature of the additive can be regarded as being constant. For the amount of change in temperature, a slight allowable range can be provided around 0.

Further, the detection of temperature of the additive by the foregoing detection section can be a direct detection by using a temperature sensor or the like, or an indirect detection by estimating the temperature of the additive by means of the outside air temperature.

In accordance with one aspect of the present invention, the additive supply device is provided with an outside air temperature sensor for detecting an outside air temperature, and the higher the outside air temperature, the greater the amount of reduction in the current supply amount carried out by the control section becomes. In this instance, the amount of reduction in the current supply amount in carrying out the current reduction process is made larger as the outside air temperature is increases, that is, as the thawed additive becomes less likely to refreeze. Therefore, the amount of current supplied to the heater can be reduced as much as possible while restraining the refreezing of the additive.

In accordance with one aspect of the present invention, the control section carries out, as the current reduction process, a process for stopping the supply of current to the heater. In this instance, the amount of current supplied to the heater can be reduced maximally compared to the case of performing the current supply to the heater while reducing the current supply amount during execution of the current reduction process.

In accordance with one aspect of the present invention, the additive supply device starts supply of the additive when the current reduction process is carried out. In this instance, a part of the additive is changed from the solid phase to the liquid phase when the current reduction process is carried out, so that the additive supply to the exhaust passage is started. Consequently, the supply of the additive can be started much earlier than the case of starting the additive supply after the entire additive is thawed. Thus, the effect obtained by the additive supply can be obtained at a much earlier stage.

In accordance with one aspect of the present invention, the supply mechanism is provided with a pump for feeding the additive, a supply passage for supplying the additive having been fed from the pump to the exhaust passage, and a pressure sensor for detecting a feed pressure of the additive fed to the supply passage. The control section activates the pump after the current reduction process is carried out. When the feed pressure after the pump is activated is lower than a predetermined value, the control section increases the current supply amount. In this instance, when the temperature of the supply passage is low and the additive is frozen therein, for example, the rise in the foregoing feed pressure is stopped even if the pump is activated after execution of the current reduction process. Accordingly, in this aspect, the pump is activated after execution of the current reduction process. When the feed pressure after the pump driving is lower than a predetermined value and the rise in the feed pressure is stopped, the amount of current supplied to the heater in the supply mechanism is then increased. By this increase in the amount of current supplied to the heater, the thawing of the additive frozen within the supply passage is promoted.

In accordance with one aspect of the present invention, the supply mechanism has a pump for feeding the additive, and the heater is provided to the pump. In addition to this aspect, it is possible to adopt a configuration that the foregoing supply mechanism has a tank for storing the additive and the foregoing heater is provided to that tank, and a configuration that the foregoing supply mechanism has a supply passage for supplying the additive to the exhaust passage and the foregoing heater is provided to that supply passage.

Further, it is possible to adopt, as the foregoing additive, a reducing agent added to reduce and purify NOx in the exhaust by a catalyst, for example.

### BRIEF DESCRIPTION OF THE DRAWINGS

Fig. 1 is a schematic diagram showing an overall configuration of a first embodiment of the present invention;
Fig. 2 is a schematic diagram showing a configuration of a urea aqueous solution supply mechanism according to the same embodiment;
Fig. 3 is a graph showing temperature changes in thawing urea aqueous solution;
Fig. 4 is a flowchart showing the procedure of a thawing process in the same embodiment;
Fig. 5 is a conceptual diagram showing a relationship between the outside air temperature and the amount of reduction in supplied current;
Fig. 6 is a flowchart showing the procedure of a thawing process according to a second embodiment;
Fig. 7 is a flowchart showing a part of a procedure of a modified embodiment of the thawing process in the first and second embodiments;
Fig. 8 is a schematic diagram showing a configuration of a modified embodiment of the urea aqueous solution supply mechanisms in the first and second embodiments; and
Fig. 9 is a schematic diagram showing a configuration of a modified embodiment of the urea aqueous solution supply mechanisms in the first and second embodiments.

### MODES FOR CARRYING OUT THE INVENTION

### First Embodiment

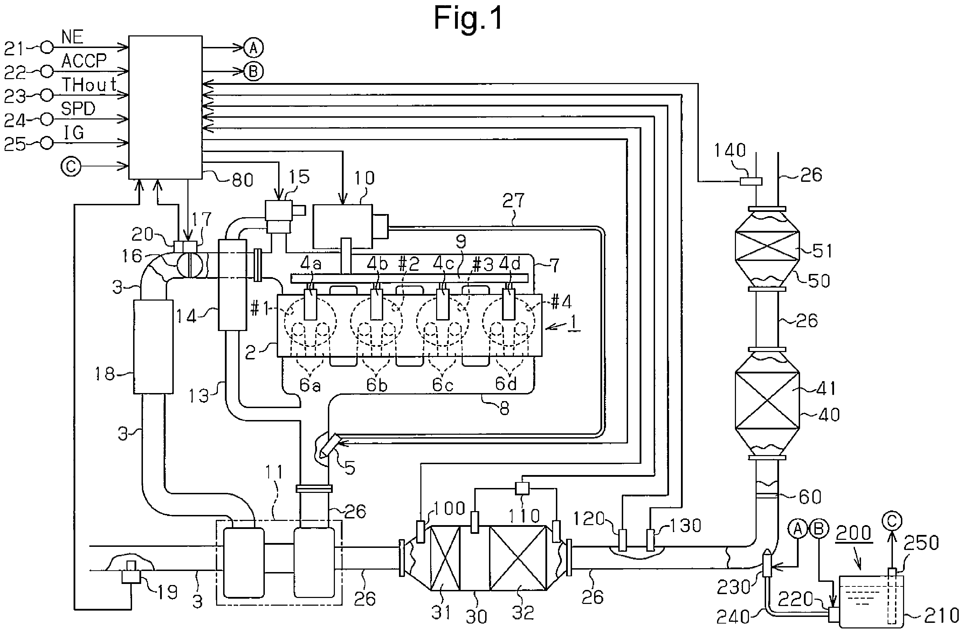

Hereinafter, an additive supply device for an internal combustion engine according to a first embodiment of the present invention will be described with reference to Figs. 1 to 5. The additive supply device is applied to a diesel engine (hereinafter, referred to as an engine) mounted on a vehicle.

As shown in Fig. 1, an engine 1 is provided with a plurality of cylinders #1 to #4. Fuel injection valves 4a to 4d are attached to a cylinder head 2. These fuel injection valves 4a to 4d inject fuel to combustion chambers of corresponding cylinders #1 to #4. The cylinder head 2 is also provided with intake ports for introducing fresh air into the cylinders #1 to #4 and exhaust ports 6a to 6d for discharging combustion gas outside the cylinders #1 to #4, correspondingly to respective cylinders #1 to #4. The engine 1 has a crankshaft to which an alternator for generating electricity by means of engine output is connected.

The fuel injection valves 4a to 4d are connected to a common rail 9 for accumulating the pressure of high-pressure fuel. The common rail 9 is connected to a supply pump 10. The supply pump 10 draws in fuel within a fuel tank and supplies high-pressure fuel to the common rail 9. The high pressure fuel supplied to the common rail 9 is injected into the cylinders from the respective fuel injection valves 4a to 4d at the time of opening the same.

To the intake ports, an intake manifold 7 is connected. The intake manifold 7 is connected to an intake passage 3. Inside this intake passage 3, an intake throttle valve 16 for adjusting an intake air amount is provided.

To the exhaust ports 6a to 6d, an exhaust manifold 8 is connected. The exhaust manifold 8 is connected to an exhaust passage 26.

A turbocharger 11 for supercharging an intake air introduced to the cylinders by using the exhaust pressure is provided in the middle of the exhaust passage 26. An intercooler 18 is provided in the intake passage 3 between an intake-side compressor of the turbocharger 11 and the intake throttle valve 16. The intercooler 18 cools the intake air of which the temperature has been increased due to the supercharging by the turbocharger 11.

Further, a first purifying member 30 for purifying the exhaust is provided in the middle of the exhaust passage 26 and downstream of an exhaust-side turbine of the turbocharger 11. Inside this first purifying member 30, an oxidation catalyst 31 and a DPF catalyst 32 are arranged in series with respect to the flow direction of the exhaust.

A catalyst for oxidizing HC in the exhaust is supported by the oxidation catalyst 31. The DPF catalyst 32 is a filter for collecting particulate matter (PM) in the exhaust, and is formed of porous ceramic, and a catalyst for promoting the oxidation of PM is supported thereat. The PM in the exhaust is collected when passing through a porous wall of the DPF catalyst 32.

Further, a fuel addition valve 5 for supplying fuel as an additive to the oxidation catalyst 31 or the DPF catalyst 32 is provided in the vicinity of a collecting portion of the exhaust manifold 8. This fuel addition valve 5 is connected to the foregoing supply pump 10 via a fuel supply pipe 27. The arrangement position of the fuel addition valve 5 can be changed appropriately if in the exhaust system and at the upstream side of the first purifying member 30.

A second purifying member 40 for purifying the exhaust is provided in the middle of the exhaust passage 26 and downstream of the first purifying member 30. Inside the second purifying member 40, a selective reduction NOx catalyst (hereinafter, referred to as an SCR catalyst) 41 as an exhaust purification catalyst for reducing and purifying NOx in the exhaust by means of a reducing agent is arranged.

Further, a third purifying member 50 for purifying the exhaust is provided in the middle of the exhaust passage 26 and downstream of the second purifying member 40. Inside the third purifying member 50, an ammonia oxidation catalyst 51 for purifying ammonia in the exhaust is arranged.

The engine 1 is provided with a urea aqueous solution supply mechanism 200 for supplying urea aqueous solution as an additive (a reducing agent) to the foregoing SCR catalyst 41. The urea aqueous solution supply mechanism 200 includes a tank 210 for storing the urea aqueous solution, a pump 220 for feeding the urea aqueous solution from the tank 210, a urea injection valve 230 for injecting and supplying the urea aqueous solution into the exhaust passage 26, a supply pipe 240 as a supply passage for connecting the urea injection valve 230 and the pump 220, a level sensor 250 for detecting the amount of urea aqueous solution having been stored within the tank 210, and a heater for heating the urea aqueous solution within the urea aqueous solution supply mechanism 200.

The urea injection valve 230 is provided on the exhaust passage 26 between the first purifying member 30 and the second purifying member 40, and has a nozzle opened toward the SCR catalyst 41. When this urea injection valve 230 is opened, the urea aqueous solution is injected and supplied into the exhaust passage 26 by way of the supply pipe 240.

When rotated forward, the pump 220 is an electric pump and feeds the urea aqueous solution from the tank 210 toward the urea injection valve 230. When rotated in reverse, the pump 220 feeds the urea aqueous solution from the urea injection valve 230 toward the tank 210. That is, the urea aqueous solution is collected from the urea injection valve 230 and the supply pipe 240 and returned to the tank 210 during the reverse rotation of the pump 220.

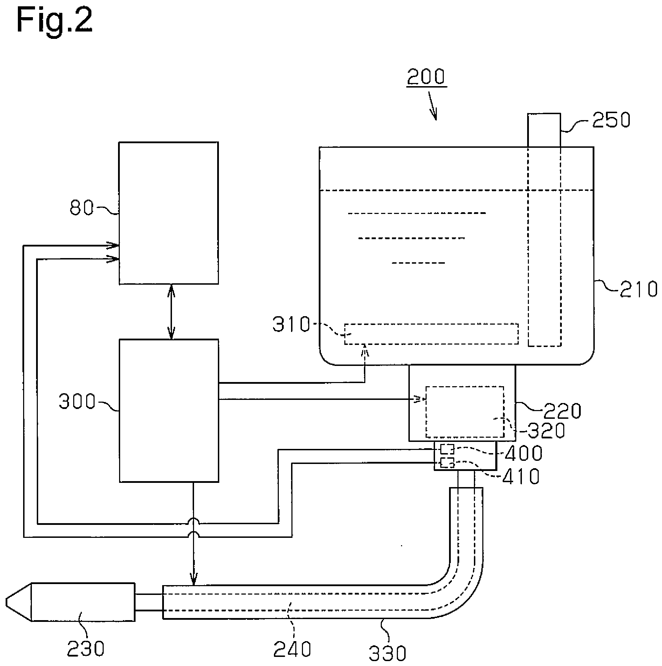

In the present embodiment, as shown in Fig. 2, the pump 220 is provided on the bottom of the tank 210. A tank heater 310 is provided within the tank 210. A pump heater 320 is provided within the pump 220. A supply pipe heater 330 is provided on an outer circumference of the supply pipe 240.

Each of these heaters 310, 320, and 330 is connected to a heater control unit 300, and the amount of current supplied to the heaters 310, 320, and 330 is controlled by the heater control unit 300. Control over the heater current supply amount can be carried out in any appropriate manner. For example, duty control for adjusting a duty cycle of the voltage supplied to the heater, voltage control for adjusting the level of the voltage supplied to the heater, or current control for adjusting the magnitude of the current flowing through the heater may be carried out. Further, the heater control unit 300 intercommunicates with a control unit 80 described below.

A temperature sensor 400 for detecting the urea aqueous solution temperature THN, which is the temperature of the urea aqueous solution within the pump 220, and a pressure sensor 410 for detecting the urea aqueous solution pressure NP, which is the feed pressure of the urea aqueous solution fed into the supply pipe 240, are provided in the vicinity of a discharge portion of the pump 220. The temperature sensor 400 and the pressure sensor 410 are connected to the control unit 80. The temperature sensor 400 corresponds to the foregoing detection section. The detection of the urea aqueous solution temperature THN may be such that, for example, the outside air temperature is used to estimate the urea aqueous solution temperature THN to indirectly detect the same, in addition to direct detection by using the temperature sensor 400.

As shown in Fig. 1, a dispersion plate 60 is provided within the exhaust passage 26 between the urea injection valve 230 and the SCR catalyst 41. The dispersion plate 60 disperses the urea aqueous solution having been injected from the urea injection valve 230, thereby promoting atomization of the urea aqueous solution.

The urea aqueous solution injected from the urea injection valve 230 is adsorbed as ammonia when reaching the SCR catalyst 41. NOx is then reduced and purified by ammonia having been adsorbed by the SCR catalyst 41.

Moreover, the engine 1 is provided with an exhaust gas recirculation system (hereinafter, referred to as an EGR system). This EGR system is a system that lowers the combustion temperature within the cylinders by introducing some of the exhaust into the intake air and reduces the generation amount of NOx. This exhaust gas recirculation system includes an EGR passage 13 connecting the intake passage 3 and the exhaust manifold 8 to each other, an EGR valve 15 provided in the EGR passage 13, and an EGR cooler 14. The opening degree of the EGR valve 15 is adjusted, whereby an exhaust recirculation amount to be introduced from the exhaust passage 26 to the intake passage 3, or the so-called external EGR amount, is regulated. Further, the temperature of the exhaust flowing within the EGR passage 13 is lowered by the EGR cooler 14.

Various sensors and switches for detecting the engine operational state are attached to the engine 1. For example, an air flow meter 19 detects the intake air amount GA within the intake passage 3. A throttle valve opening degree sensor 20 detects the opening degree of the intake throttle valve 16. An engine speed sensor 21 detects the rotational speed of the crankshaft, that is, the engine speed NE. An accelerator operation amount sensor 22 detects the depression amount of the accelerator pedal (an accelerator operating member), that is, an accelerator operation amount ACCP. An outside air temperature sensor 23 detects the outside air temperature THout. A vehicle speed sensor 24 detects the vehicle speed SPD of the vehicle the engine 1 is mounted on. An ignition switch 25 detects the starting operation and the stopping operation of the engine 1 by the vehicle driver.

A first exhaust temperature sensor 100 provided upstream of the oxidation catalyst 31 detects the first exhaust temperature TH1, which is the exhaust temperature before flowing into the oxidation catalyst 31. A differential pressure sensor 110 detects the pressure difference ΔP between the exhaust pressures upstream and downstream of the DPF catalyst 32.

A second exhaust temperature sensor 120 and a first NOx sensor 130 are provided on the exhaust passage 26 between the first purifying member 30 and the second purifying member 40 and upstream of the urea injection valve 230. The second exhaust temperature sensor 120 detects the second exhaust temperature TH2, which is the exhaust temperature before flowing into the SCR catalyst 41. The first NOx sensor 130 detects the first NOx concentration N1, which is the NOx concentration in the exhaust before flowing into the SCR catalyst 41.

A second NOx sensor 140 for detecting the second NOx concentration N2, which is the NOx concentration in the exhaust having passed through the SCR catalyst 41, is provided on the exhaust passage 26 downstream from the third purifying member 50.

Outputs of these various sensors are sent to the control unit 80 serving as the foregoing control section. This control unit 80 is mainly composed of a microcomputer having a central processing unit (a CPU), a read-only memory (a ROM) for prestoring a variety of programs and maps, a random-access memory (a RAM) for temporarily storing calculation results of the CPU, a timer counter, an input interface, and an output interface.

The control unit 80 carries out various controls of the engine 1 such as, for example, fuel injection amount control and fuel injection timing control of the fuel injection valves 4a to 4d and the fuel addition valve 5, discharge pressure control of the supply pump 10, driving amount control of the actuator 17 for opening and closing the intake throttle valve 16, opening degree control of the EGR valve 15.

The control unit 80 also carries out addition control of the urea aqueous solution by the foregoing urea injection valve 230 as one of the exhaust purification controls. In this addition control, a supply amount of the urea aqueous solution required for reducing NOx discharged from the engine 1 is calculated. The opening state of the urea injection valve 230 is controlled such that the calculated supply amount of the urea aqueous solution can be injected from the urea injection valve 230. In this manner, the supply of the urea aqueous solution is performed with respect to the exhaust passage 26 during operation of the engine 1 in order to purify NOx.

The control unit 80 also carries out current supply control of each heater 310, 320, 330 via the heater control unit 300. More specifically, the control unit 80 determines a freezing state of the urea aqueous solution based on the urea aqueous solution temperature THN. When the urea aqueous solution is frozen and cannot be supplied into the exhaust passage 26, the control unit 80 actuates each heater 310, 320, 330 to thaw the urea aqueous solution, thereby allowing the supply of the urea aqueous solution into the exhaust passage 26.

Electricity consumption is increased when the heaters are supplied with current. Therefore, the amount of electricity generation of the alternator is increased in the engine 1 to compensate for such increase in electric load, for example. Since the engine output is increased when the amount of electricity generation of the alternator is increased as above, fuel consumption is more likely to be increased. Accordingly, the present embodiment is configured to restrain the increase in fuel consumption by reducing the amount of current supplied to the heaters.

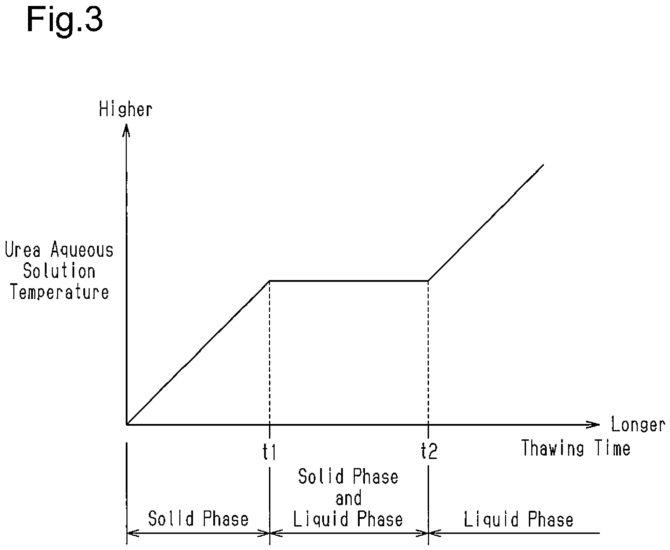

Fig. 3 shows Temperature changes of the urea aqueous solution in thawing the frozen urea aqueous solution by supplying current to the heaters. As shown in this Fig. 3, the temperature of the solid-phase urea aqueous solution is gradually increased with the lapse of the thawing time when current is supplied to the heaters to thaw the frozen urea aqueous solution. Once a part of the frozen urea aqueous solution starts to be thawed and changes to the liquid phase, the temperature increase of the urea aqueous solution is temporarily stopped (point in time t1) and maintained at a constant temperature, that is, the melting temperature. After the entire urea aqueous solution is thawed and changes to the liquid phase, the temperature of the urea aqueous solution starts to rise again (point in time t2). Since a part of the urea aqueous solution changes from the solid state to the liquid state when the temperature of the urea aqueous solution stays constant during the current supply to the heaters as above, it is possible to supply the urea aqueous solution into the exhaust passage 26.

Accordingly, the present embodiment is configured to carry out a current reduction process for reducing the amount of current supplied to the heaters when the temperature of the urea aqueous solution becomes constant during the current supply to the heaters. The amount of current supplied to the heaters in thawing the urea aqueous solution is reduced by carrying out this current reduction process in comparison with the case in which the heater is kept in the ON state until the urea aqueous solution is completely thawed and the current supply amount is not reduced.

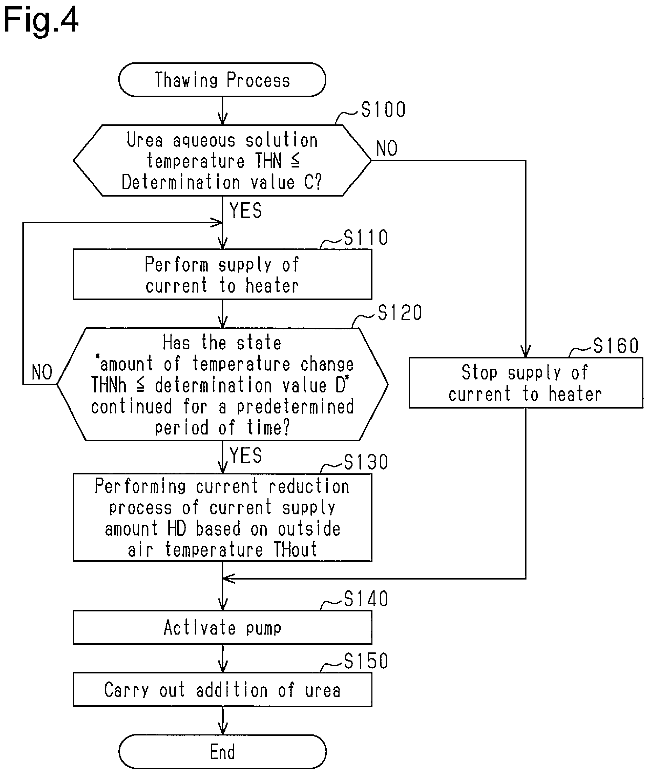

With regard to the thawing process of the urea aqueous solution for carrying out the foregoing current reduction process, a procedure thereof is shown in Fig. 4. This process is carried out repeatedly by the control unit 80. Further, the current supply amount HD of the pump heater 320 is controlled in this thawing process.

Upon start of this process, a determination as to whether the urea aqueous solution temperature THN is lower than or equal to a determination value C is made (S100), first. The determination value C is set to a value capable of determining whether the urea aqueous solution within the pump 220 is frozen. When the urea aqueous solution temperature THN exceeds the determination value C (S100: NO), the urea aqueous solution is determined not to be frozen, and the current supply to the pump heater 320 is stopped (S160), and this process is temporarily ended.

On the other hand, when the urea aqueous solution temperature THN is lower than or equal to the determination value C (S100: YES), the current supply to the pump heater 320 is performed in order to thaw the frozen urea aqueous solution (S110). The current supply amount HD in performing the current supply at step S110 is set at the maximum current supply amount HDmax. The current supply amount HD in performing the current supply at step S110 may be varied, for example, based on the urea aqueous solution temperature THN.

Next, whether the state in which "the amount of temperature change THNh ≤ the determination value D" has continued for a predetermined period of time is determined (S120). This amount of temperature change THNh is an amount of change in the urea aqueous solution temperature THN within a predetermined time. As the determination value D, a value capable of determining whether the temperature of the urea aqueous solution within the pump 220 stays constant, that is, whether the amount of temperature change THNh is substantially 0 is set. The expression "the temperature of the urea aqueous solution stays constant" does not indicate only the time when the amount of temperature change of the urea aqueous solution is completely 0. That is, it indicates, with regard to the state of the urea aqueous solution during thawing, a state where both the solid phase and the liquid phase are present in a mixed state and the temperature of the urea aqueous solution can be regarded as being constant. For the determination value D for determining the amount of temperature change THNh, a slight allowable range is set around 0.

The entire urea aqueous solution within the pump 220 is in the solid phase when a negative determination is made at step S120. Accordingly, the processes at step S110 and step S120 are repeated until a positive determination is made at step S120, whereby the thawing of the urea aqueous solution within the pump 220 proceeds with the current supply amount HD of the pump heater 320 maintained at the maximum current supply amount HDmax.

In contrast, a part of the urea aqueous solution within the pump 220 is in the liquid phase when a positive determination is made at step S120. Accordingly, upon a positive determination at step S120, the current reduction process for reducing the current supply amount HD while performing the current supply to the pump heater 320 is carried out based on the outside air temperature THout (S130).

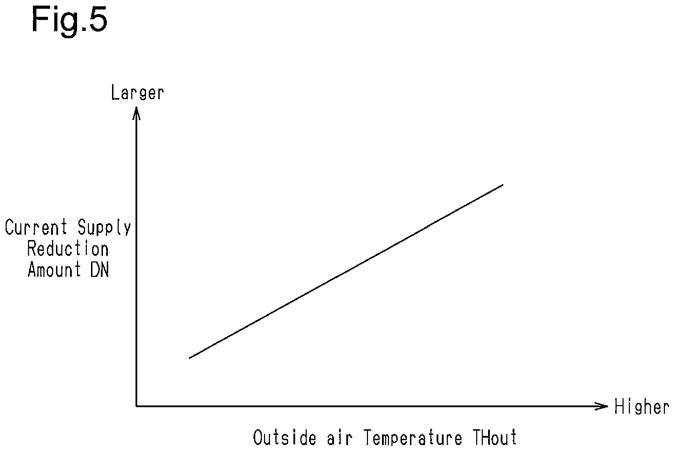

As shown in Fig. 5, the current supply reduction amount DN, by which the current supply amount HD is reduced, is made larger as the outside air temperature THout increases, at step S130. The current supply amount HD reduced by the current supply reduction amount DN from the currently set current supply amount HD (that is, the maximum current supply amount HDmax) is supplied to the pump heater 320.

The current reduction process is carried out in this manner, whereupon the pump 220 is activated (S140), and addition of urea is carried out when a demand for addition of the urea aqueous solution arises (S150). This process is then temporarily ended.

Operation of the present embodiment will now be described.

In the thawing process as shown in Fig. 4, the current reduction process for reducing the current supply amount HD of the pump heater 320 is carried out at step S130 when a positive determination is made at step S120, that is, when the temperature of the urea aqueous solution is determined to stay constant. Therefore, the current supply amount HD of the pump heater 320 in thawing the urea aqueous solution is reduced compared to the case where the heater is kept in the ON state until the urea aqueous solution is completely thawed and the current supply amount is not reduced.

In carrying out the current reduction process at step S130, the current supply amount HD of the pump heater 320 with the current supply to the pump heater 320 performed is reduced compared to the current supply amount HD before the temperature of the urea aqueous solution becomes constant. Since the current supply to the pump heater 320 is performed even during execution of the current reduction process as above, refreezing of the thawed urea aqueous solution is restrained.

Further, as shown in Fig. 5, when the current reduction process is carried out, the current supply reduction amount DN is made larger as the outside air temperature THout increases. Therefore, the higher the outside air temperature THout and the less likely that the thawed urea aqueous solution is refrozen, the larger the current supply reduction amount DN is made. Therefore, the amount of reduction in the current supply amount HD is increased. As a result, the current supply amount HD of the pump heater 320 can be reduced as much as possible while restraining the refreezing of the urea aqueous solution due to the current reduction process.

Once the current reduction process is carried out at step S130, supply of the urea aqueous solution is started by addition of urea carried out at step S150. When the current reduction process is carried out like this, a part of the urea aqueous solution is changed from the solid phase to the liquid phase, so that supply of the urea aqueous solution to the exhaust passage 26 is started. Consequently, the supply of the urea aqueous solution can be started much earlier than the case where the supply of the urea aqueous solution is started after the entire urea aqueous solution is thawed. As a result, the effect obtained by the supply of the urea aqueous solution, that is, the effect of purification of NOx can be obtained at a much earlier stage.

The present embodiment described above achieves the following advantages.
(1) The current reduction process for reducing the current supply amount HD compared to that before the urea aqueous solution temperature THN becomes constant is carried out when the urea aqueous solution temperature THN becomes constant during current supply to the pump heater 320. Thus, the current supply amount HD of the pump heater 320 in thawing the urea aqueous solution is reduced. Since the current supply amount HD is reduced, increase in the amount of electricity generation of the alternator, for example, can be limited. This limits increase in fuel consumption due to current supply to the heater.
(2) In carrying out the current reduction process, the current supply amount HD is reduced while performing the current supply to the pump heater 320. Therefore, refreezing of the thawed urea aqueous solution is restrained.
(3) The current supply reduction amount DN in carrying out the current reduction process is made larger as the outside air temperature THout increases. Thus, the current supply amount HD to the pump heater 320 can be reduced as much as possible while restraining the refreezing of the urea aqueous solution.
(4) The supply of the urea aqueous solution is started upon execution of the current reduction process. Consequently, the supply of the urea aqueous solution is started much earlier than the case where the supply of the urea aqueous solution is started after the entire urea aqueous solution is thawed. Thus, the effect of purification of NOx is obtained at a much earlier stage.

### Second Embodiment

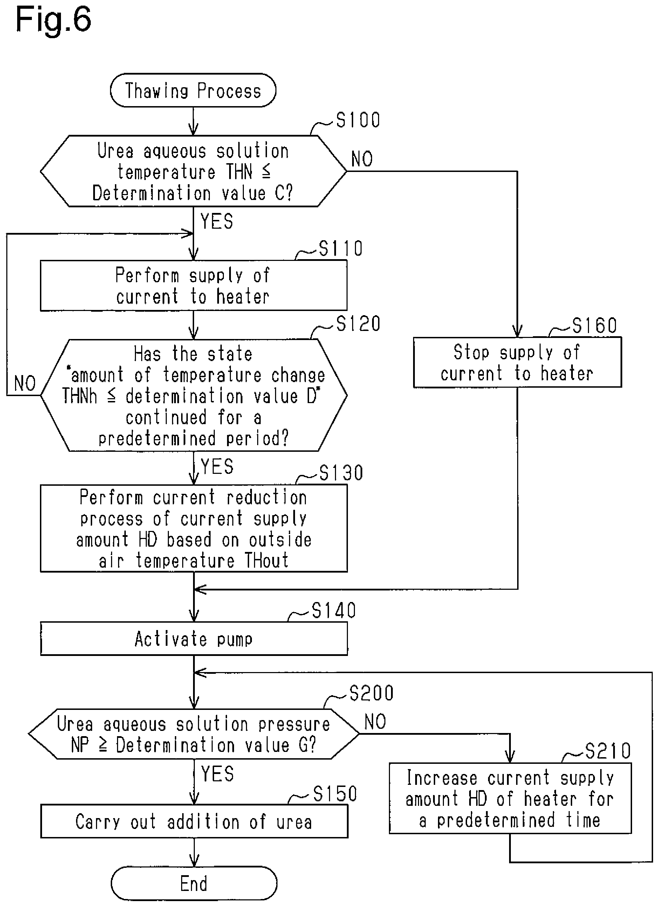

Next, an additive supply device for an internal combustion engine according to a second embodiment of the present invention will be described with reference to Fig. 6.

The first embodiment is configured such that a part of the urea aqueous solution is determined to be in the liquid phase when the urea aqueous solution temperature THN detected by the temperature sensor 400 in the pump 220 becomes constant, and then the foregoing current reduction process is carried out to start the addition of urea.

In the meantime, where the temperature of the supply pipe 240 is lowered and the urea aqueous solution is frozen within the pipe, for example, due to a failure of the supply pipe heater 330 or relative wind onto the vehicle, the addition of urea cannot be carried out in reality even if the addition of urea is started after the current reduction process is carried out.

When the urea aqueous solution is frozen inside the supply pipe 240, the rise in feed pressure of the urea aqueous solution fed into the supply pipe 240, that is, in the foregoing urea aqueous solution pressure NP is stopped even if the pump 220 is activated after the foregoing current reduction process is carried out. Accordingly, in the thawing process of the present embodiment, the pump 220 is activated after the current reduction process is carried out. Then, when the urea aqueous solution pressure NP after the driving of this pump is lower than a determination value G, that is, when the rise in feed pressure of the urea aqueous solution is stopped, the amount of current supplied to the heater provided to the urea aqueous solution supply mechanism 200, more specifically, the current supply amount HD of the pump heater 320 is increased. By this increase in the heater current supply amount, the thawing of the urea aqueous solution frozen in the supply pipe 240 is promoted.

In the thawing process of the present embodiment, new steps S200 and S210 are added between step S140 and step S150 of the thawing process shown in Fig. 4. Hereinafter, the thawing process of the present embodiment will be described focusing on differences from the first embodiment.

As shown in Fig. 6, when the state "the amount of temperature change THNh ≤ the determination value D" is determined to have continued for a predetermined period of time at step S120 (S120: YES), the current reduction process of the current supply amount HD is carried out (S130) and the pump 220 is activated (S140) in the present embodiment as well.

Upon driving of the pump 220, whether the urea aqueous solution pressure NP is higher than or equal to the determination value G is determined (S200) in the present embodiment. The determination value G is set to a value capable of determining whether the feeding of the urea aqueous solution by the pump driving is being performed properly.

When the urea aqueous solution pressure NP is higher than or equal to the determination value G (S200: YES), it is determined that the urea aqueous solution pressure NP has been sufficiently increased and the feeding of the urea aqueous solution by the pump driving is being performed properly. Addition of urea is carried out when addition of the urea aqueous solution is demanded (S150), and this process is temporarily ended.

In contrast, when the urea aqueous solution pressure NP is less than the determination value G (S200: NO), it is determined that the urea aqueous solution pressure NP is insufficient and a problem is occurring in the feeding of the urea aqueous solution by the pump driving. Since the freezing of the urea aqueous solution within the supply pipe 240 is conceived as a cause of the feeding problem, the current supply amount HD of the pump heater 320 is increased for a predetermined time in order to promote the thawing of the urea aqueous solution (S210). At step S210, the current supply amount HD, which has been reduced by the current supply reduction amount DN in the current reduction process at step S130, is increased up to the maximum current supply amount HDmax again. Instead of increasing the current supply amount HD to the maximum current supply amount HDmax, the current supply amount HD may be increased by reducing the current supply reduction amount DN by a predetermined amount.

The process at step S210 is then executed repeatedly until a positive determination is made at step S200.

Characteristic operation of the present invention will now be described.

As shown in Fig. 6, after the current reduction process is carried out at step S130, the pump 220 is activated at step S140. The urea aqueous solution is likely to be frozen within the supply pipe 240 when the urea aqueous solution pressure NP after the pump activation is determined to be lower than the determination value G at step S200. Therefore, the current supply amount HD of the pump heater 320 is increased at step S210. Upon an increase in the current supply amount HD in this manner, the amount of heat conduction from the pump 220 to the supply pipe 240 is increased and the temperature of the urea aqueous solution within the pump 220 is also raised. Therefore, the thawing of the urea aqueous solution within the supply pipe 240 is promoted.

In addition to the advantages (1) to (4), the above described present embodiment achieves the following advantage (5).

(5) The current supply amount HD of the pump heater 320 is increased when the urea aqueous solution pressure NP after the pump activation is lower than the determination value G, as well as the pump 220 is activated after the execution of the current reduction process of the current supply amount HD. Thus, when the urea aqueous solution is frozen within the supply pipe 240, the thawing of that frozen urea aqueous solution is promoted.

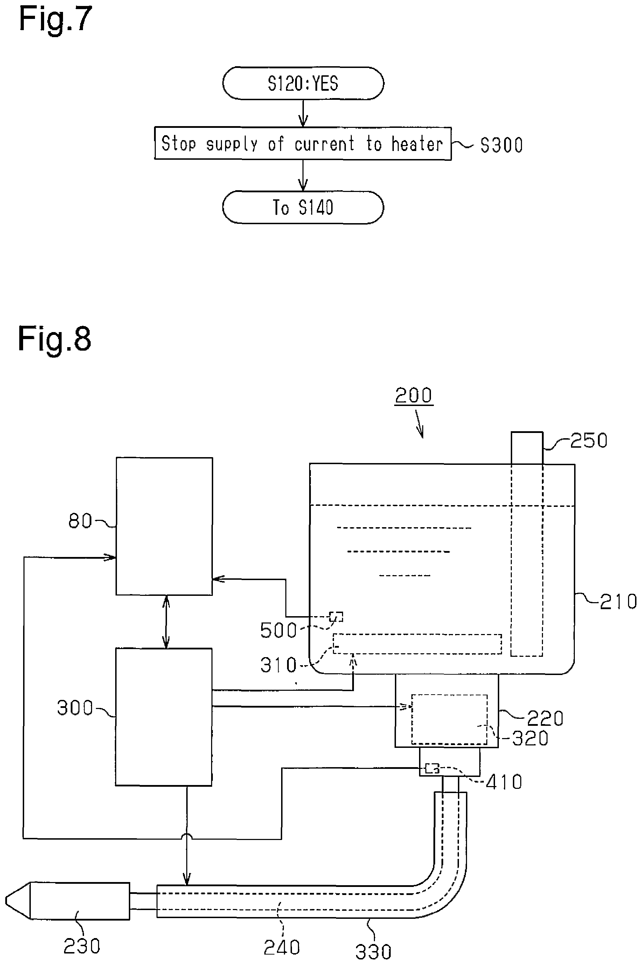

The above described embodiments may be modified as follows.
- The current supply reduction amount DN is varied based on the outside air temperature THout when the current reduction process of the current supply amount HD is carried out. However, this variable setting may be omitted and the current supply reduction amount DN may be a fixed value defined in advance.
- The current supply amount HD of the pump heater 320 is increased when the urea aqueous solution pressure NP is lower than the determination value G, in the second embodiment. Besides this, the amount of current supplied to the supply pipe heater 330 may be increased. In this instance, the thawing of the urea aqueous solution within the supply pipe 240 is promoted much further.
- When the current reduction process of the current supply amount HD is carried out at step S130 of Figs. 4 and 6, the current supply amount is reduced while performing the current supply to the heater. In addition to this, current reduction process at step S300 for stopping the current supply to the heater may be carried out as shown in Fig. 7 instead of the current reduction process at step S130. In this instance, the amount of current supplied to the heater can be reduced maximally compared to the case of performing the current supply to the heater while reducing the current supply amount during execution of the current reduction process.
- In the thawing process of the first and second embodiments, the amount of current supplied to the pump heater 320 is controlled while proceeding with the process based on the temperature of the urea aqueous solution within the pump 220. Besides this, a temperature sensor 500 for detecting the temperature of the urea aqueous solution within the tank 210 may be provided to the tank 210 as shown in Fig. 8. In the thawing process shown in Figs. 4 and 6, the amount of current supplied to the tank heater 310 may be controlled while proceeding with the process based on the temperature of the urea aqueous solution within the tank 210. In this instance, the condition of the urea aqueous solution within the tank 210 can be determined to reduce the amount of current supplied to the tank heater 310.

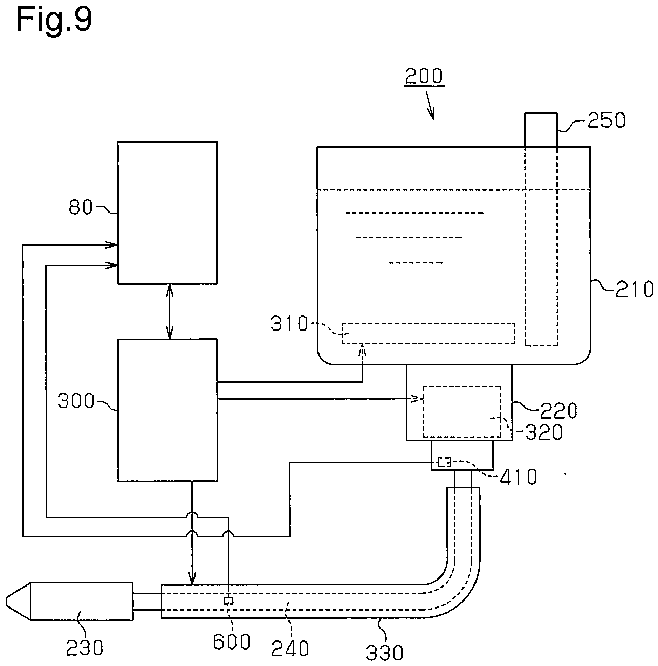

Further, as shown in Fig. 9, a temperature sensor 600 for detecting the temperature of the urea aqueous solution within the supply pipe 240 may be provided to the supply pipe 240. In the thawing process shown in Figs. 4 and 6, the amount of current supplied to the supply pipe heater 330 may be controlled while proceeding with the process based on the temperature of the urea aqueous solution within the supply pipe 240. In this instance, the condition of the urea aqueous solution within the supply pipe 240 can be determined to reduce the amount of current supplied to the supply pipe heater 330.

· In each of the foregoing embodiments, the case where the present invention is applied to the additive supply device by use of the urea aqueous solution, which is a reducing agent, as an additive has been described. However, the present invention can be similarly applied to an additive supply device that uses other additives.

### DESCRIPTION OF THE REFERENCE NUMERALS

1...engine, 2...cylinder head, 3...intake passage, 4a-4d...fuel injection valve, 5...fuel addition valve, 6a-6d...exhaust port, 7...intake manifold, 8...exhaust manifold, 9...common rail, 10...supply pump, 11...turbocharger, 13...EGR passage, 14...EGR cooler, 15...EGR valve, 16...intake throttle valve, 17...actuator, 18...intercooler, 19...air flow meter, 20...throttle valve opening degree sensor, 21...engine speed sensor, 22...accelerator operation amount sensor, 23...outside air temperature sensor, 24...vehicle speed sensor, 25...ignition switch, 26...exhaust passage, 27...fuel supply pipe, 30...first purifying member, 31...oxidation catalyst, 32...filter, 40...second purifying member, 41...NOx purifying catalyst (selective reduction NOx catalyst: SCR catalyst), 50...third purifying member, 51...ammonia oxidation catalyst, 60...dispersion plate, 80...control unit, 100...first exhaust temperature sensor, 110...differential pressure sensor, 120...second exhaust temperature sensor, 130...first NOx sensor, 140...second NOx sensor, 200...urea aqueous solution supply mechanism, 210...tank, 220...pump, 230...urea injection valve, 240...supply pipe, 250...level sensor, 300...heater control unit, 400, 500, 600...temperature sensor, 410...pressure sensor

## Claims

1. An additive supply device for an internal combustion engine (1), the device comprising:
a supply mechanism (200) for supplying an additive into an exhaust passage (26) of the internal combustion engine (1);
a heater (310, 320, 330) for heating the additive within the supply mechanism (200);
a detection section (400, 500, 600) for detecting a temperature of the additive within the supply mechanism (200); and
a control section (80) configured to control an amount of current supplied to the heater (310, 320, 330),
**characterized in that**:
as a response to the temperature of the additive detected by the detection section (400, 500, 600) becoming constant during supply of current to the heater (310, 320, 330), the control section (80) is configured to carry out a current reduction process for reducing the amount of current supply compared to that before the temperature of the additive becomes constant.

2. The additive supply device for an internal combustion engine (1) according to claim 1, wherein
the additive supply device is provided with an outside air temperature sensor (23) for detecting an outside air temperature, and
the higher the outside air temperature, the greater the amount of reduction in the current supply amount carried out by the control section becomes (80).

3. The additive supply device for an internal combustion engine (1) according to claim 1, wherein the control section (80) carries out, as the current reduction process, a process for stopping the supply of current to the heater (310, 320, 330).

4. The additive supply device for an internal combustion engine (1) according to any one of claims 1 to 3, wherein the additive supply device starts supply of the additive when the current reduction process is carried out.

5. The additive supply device for an internal combustion engine (1) according to any one of claims 1 to 4, wherein
the supply mechanism (200) is provided with a pump (220) for feeding the additive, a supply passage (240) for supplying the additive having been fed from the pump (220) to the exhaust passage (26), and a pressure sensor (410) for detecting a feed pressure of the additive fed to the supply passage (240),
the control section (80) activates the pump (220) after the current reduction process is carried out, and
when the feed pressure after the pump (220) is activated is lower than a predetermined value, the control section (80) increases the current supply amount.

6. The additive supply device for an internal combustion engine (1) according to any one of claims 1 to 4, wherein
the supply mechanism (200) has a pump (220) for feeding the additive, and
the heater (320) is provided to the pump (220).

7. The additive supply device for an internal combustion engine (1) according to claim 5, wherein the heater (320) is provided to the pump (220).

## Patentansprüche

1. Zusatzstoffzuführvorrichtung für einen Verbrennungsmotor (1), wobei die Vorrichtung aufweist:
einen Zuführmechanismus (200) zum Zuführen eines Zusatzstoffes in einen Auslasskanal (26) des Verbrennungsmotors (1),
eine Erwärmungseinrichtung (310, 320, 330) zum Erwärmen des Zusatzstoffes in dem Zuführmechanismus (200);,
einen Erfassungsabschnitt (400, 500, 600) zum Erfassen einer Temperatur des Zusatzstoffes in dem Zuführmechanismus (200), und
einen Steuerabschnitt (80), der konfiguriert ist, eine Größe des der Erwärmungseinrichtung (310, 320, 330) zugeführten Stroms zu steuern,
**dadurch gekennzeichnet, dass**
als ein Ansprechen darauf, dass die durch den Erfassungsabschnitt (400, 500, 600) erfasste Temperatur des Zusatzstoffes während des Zuführens von Strom zu der Erwärmungseinrichtung (310, 320, 330) konstant wird, der Steuerabschnitt (80) konfiguriert ist, einen Stromreduzierprozess zum Reduzieren der Größe der Stromzuführung im Vergleich zu der vor dem Konstant-Werden der Temperatur des Zusatzstoffes auszuführen.

2. Zusatzstoffzuführvorrichtung für einen Verbrennungsmotor (1) nach Anspruch 1,
wobei die Zusatzstoffzuführeinrichtung mit einem Außenlufttemperatursensor (23) zum Erfassen einer Außenlufttemperatur versehen ist und
mit wachsender Außenlufttemperatur die Größe der Reduktion bei der Stromzuführgröße, die durch den Steuerabschnitt (80) ausgeführt wird, größer wird.

3. Zusatzstoffzuführvorrichtung für einen Verbrennungsmotor (1) nach Anspruch 1,
wobei der Steuerabschnitt (80) als den Stromreduzierprozess einen Prozess zum Stoppen der Zuführung von Strom zur Erwärmungseinrichtung (310, 320, 330) ausführt.

4. Zusatzstoffzuführvorrichtung für einen Verbrennungsmotor (1) nach einem der Ansprüche 1 bis 3, wobei die Zusatzstoffzuführvorrichtung das Zuführen des Zusatzstoffes beginnt, wenn der Stromreduzierprozess ausgeführt wird.

5. Zusatzstoffzuführvorrichtung für einen Verbrennungsmotor (1) nach einem der Ansprüche 1 bis 4, wobei
der Zuführmechanismus mit einer Pumpe (220) zum Fördern des Zusatzstoffes, einem Zuführkanal (240) zum Zuführen des von der Pumpe (220) geförderten Zusatzstoffes zu dem Auslasskanal (26) und einem Drucksensor (410) zum Erfassen eines Förderdrucks des zu dem Zuführkanal (240) geförderten Zusatzstoffes versehen ist,
der Steuerabschnitt (80) die Pumpe (220) nach dem Ausführen des Stromreduzierprozesses aktiviert und,
wenn der Förderdruck, nachdem die Pumpe (220) aktiviert ist, kleiner als ein vorbestimmter Wert ist, der Steuerabschnitt (80) die Stromzuführgröße erhöht.

6. Zusatzstoffzuführvorrichtung für einen Verbrennungsmotor (1) nach einem der Ansprüche 1 bis 4, wobei
der Zuführmechanismus (200) eine Pumpe (220) zum Fördern des Zusatzstoffes hat, und
die Pumpe (220) mit der Erwärmungseinrichtung (320) versehen ist.

7. Zusatzstoffzuführvorrichtung für einen Verbrennungsmotor (1) nach Anspruch 5,
wobei die Pumpe (220) mit der Erwärmungseinrichtung (320) versehen ist.

## Revendications

1. Dispositif d'introduction d'additif pour un moteur à combustion interne (1), le dispositif comprenant :
un mécanisme d'introduction (200) pour introduire un additif dans un passage d'échappement (26) du moteur à combustion interne (1) ;
un dispositif de chauffage (310, 320, 330) pour chauffer l'additif dans le mécanisme d'introduction(200) ;
une section de détection (400, 500, 600) pour détecter une température de l'additif dans le mécanisme d'introduction(200) ; et
une section de contrôle (80) configurée pour contrôler une quantité de courant fournie au dispositif de chauffage (310, 320, 330),
**caractérisé en ce que** :
comme une réponse à la température de l'additif détectée par la section de détection (400, 500, 600) devenant constante pendant la fourniture de courant au dispositif de chauffage (310, 320, 330), la section de contrôle (80) est configurée pour réaliser un procédé de réduction de courant pour réduire la quantité de courant fournie en comparaison à celle avant que la température de l'additif devienne constante.

2. Dispositif d'introduction d'additif pour un moteur à combustion interne (1) selon la revendication 1,
dans lequel
le dispositif d'introduction d'additif est muni d'un détecteur de température d'air extérieur (23) pour détecter une température d'air extérieur, et
plus la température d'air extérieur est élevée, plus la quantité de réduction de la quantité de fourniture de courant réalisée par la section de contrôle est élevée (80).

3. Dispositif d'introduction d'additif pour un moteur à combustion interne (1) selon la revendication 1, dans lequel la section de contrôle (80) réalise, comme le procédé de réduction de courant, un procédé pour interrompre la fourniture de courant au dispositif de chauffage (310, 320, 330).

4. Dispositif d'introduction d'additif pour un moteur à combustion interne (1) selon l'une quelconque des revendications 1 à 3, dans lequel le dispositif d'introduction d'additif démarre l'introduction de l'additif lorsque le procédé de réduction de courant est réalisé.

5. Dispositif d'introduction d'additif pour un moteur à combustion interne (1) selon l'une quelconque des revendications 1 à 4, dans lequel
le mécanisme d'introduction (200) est muni d'une pompe (220) pour introduire l'additif, d'un passage d'introduction(240) pour introduire l'additif ayant été alimenté à partir de la pompe (220) jusqu'au passage d'échappement (26), et d'un détecteur de pression (410) pour détecter une pression d'alimentation de l'additif alimenté dans le passage d'introduction(240),
la section de contrôle (80) active la pompe (220) après que le procédé de réduction de courant est réalisé, et
lorsque la pression d'introduction après que la pompe (220) est activée est inférieure à une valeur prédéterminée, la section de contrôle (80) augmente la quantité de fourniture de courant.

6. Dispositif d'introduction d'additif pour un moteur à combustion interne (1) selon l'une quelconque des revendications 1 à 4, dans lequel
le mécanisme d'introduction (200) présente une pompe (220) pour alimenter en l'additif, et
le dispositif de chauffage (320) est fourni à la pompe (220).

7. Dispositif d'introduction d'additif pour un moteur à combustion interne (1) selon la revendication 5,
dans lequel le dispositif de chauffage (320) est fourni à la pompe (220).
